# EUROPEAN PATENT SPECIFICATION

(11) **EP 3 291 644 B1**
(45) Date of publication and mention of the grant of the patent: **09.06.2021**
(21) Application number: 16786135.0
(22) Date of filing: 21.04.2016
(51) Int. Cl.: H05B 6/12

(54) **INDUCTION HEATING COOKING DEVICE**
KOCHVORRICHTUNG MIT INDUKTIONSERHITZUNG
DISPOSITIF DE CUISSON À CHAUFFAGE PAR INDUCTION

(30) Priority: 27.04.2015 JP 2015089957
(43) Date of publication of application: 07.03.2018
(73) Proprietor: Panasonic Intellectual Property Management Co., Ltd., Osaka-shi, Osaka 540-6207 (JP)
(72) Inventor: WATANABE, Noriaki, Osaka-shi, Osaka 540-6207 (JP); YAMAMOTO, Yuji, Osaka-shi, Osaka 540-6207 (JP); ISAGO, Hiroshi, Osaka-shi, Osaka 540-6207 (JP); TAKENAKA, Kazuhiko, Osaka-shi, Osaka 540-6207 (JP)
(74) Representative: SSM Sandmair
(86) International application number: PCT/JP2016/002139
(87) International publication number: WO 2016/174856

(56) References cited:
- EP-A2- 2 170 010
- JP-A- 2011 090 798
- JP-A- 2013 080 604
- JP-A- 2013 137 938
- JP-A- 2013 171 708
- JP-A- 2013 229 346

## Description

### TECHNICAL FIELD

The present invention relates to induction heating cookers for use in ordinary homes and businesses.

### BACKGROUND ART

Conventionally, induction heating cookers have had heating coil units including ferrites, which are placed under top plates. Generally, induction heating cookers are configured to heat a single to-be-heated object, with a single heating coil unit. However, in recent years, there have been suggested induction heating cookers having multi-coil structures for heating a single to-be-heated object with a plurality of heating coil units (for example, PTL 1).

However, in induction heating cookers having conventional multi-coil structures, heating coil units are placed closely to each other and, therefore, in the heating coil units adjacent to each other, magnetic fluxes generated therefrom are influenced by the ferrite cores in the heating coil units adjacent thereto. Further, in the heating coil units placed at the ends, magnetic fluxes are not spread in a substantially-concentric shape from the heating coil units, thereby inducing deflections therein. This inhibits magnetic fluxes from concentrating in a to-be-heated object such as a pan, thereby inducing the problem of increases of electromagnetic wave leakages and radiant noises.

JP2011090798 A discloses an induction cooking device including a top plate, a plurality of peripheral coils wound on a predetermined plane at a lower part of the top plate, and arranged adjacently at a central coil and around it, a plurality of power supply circuit parts supplying high-frequency current to the central coil and the peripheral coils so as high frequency current to flow in the same direction in an area where each peripheral coil is adjacent to the central coil, a first high magnetic permeability member reducing magnetic resistance of a magnetic circuit generated at the central coil, and a plurality of second high magnetic permeability members reducing each magnetic resistance of the magnetic circuit generated at each peripheral coil. The magnetic resistance of each of the second high magnetic permeability members at the magnetic circuit of each peripheral coil is to be smaller than that of the first high magnetic permeability member at the magnetic circuit of the central coil.

### Citation List

### Patent Literature

PTL 1: Unexamined Japanese Patent Publication No. 2014-044823
PTL 2: JP 2011 090798 A

### SUMMARY OF THE INVENTION

The invention is defined by the independent claim, whereas the dependent claims and the embodiments described in the description relate to advantageous embodiments.

The present invention was made in view of conventional problems as described above and aims at providing an induction heating cooker with excellent reliability which has a multi-coil structure including a plurality of heating coils and is capable of suppressing electromagnetic wave leakages and radiant noises.

More specifically, in an example of an exemplary embodiment of the present invention, there is provided an induction heating cooker including an outer shell having an opening portion in an upper portion of the outer shell, a top plate configured to cover the opening portion and on which an object to be heated is placed, and a plurality of heating coil units provided under the top plate inside the outer shell and configured to heat the object to be heated. A first ferrite is provided under each of the plurality of heating coil units, and the heating coil units are placed closely to each other. Further, the heating coil units include a heating coil unit placed at an end, and a heating coil unit adjacent to the heating coil unit placed at the end. A second ferrite is provided adjacently to the heating coil unit placed at the end, among the plurality of heating coil units. The second ferrite is placed in an opposite side with respect to the heating coil unit placed at the end, from the heating coil unit adjacent thereto in an inner side, and between the outer shell and the heating coil unit placed at the end.

With this structure, even when a to-be-heated object such as a pan is heated with the heating coil unit placed at the end, it is possible to suppress deflections of magnetic fluxes, thereby causing magnetic fluxes to spread substantially in a concentric shape, so that magnetic fluxes are liable to concentrate in the to-be-heated object. This can suppress leakages of electromagnetic waves and radiant noises.

### BRIEF DESCRIPTION OF DRAWINGS

FIG. 1 is an exploded perspective view of an induction heating cooker according to a first exemplary embodiment of the present invention.
FIG. 2 is a plan view illustrating a state where a top plate has been removed, according to the first exemplary embodiment of the present invention.
FIG. 3 is an exploded perspective view of heating coil units in the induction heating cooker according to the first exemplary embodiment of the present invention.
FIG. 4 is a cross-sectional view of main portions of the induction heating cooker, illustrating flows of magnetic lines of forces in the induction heating cooker illustrated in FIG. 1.
FIG. 5 is a plan view illustrating a state where a top plate has been removed, according to a second exemplary embodiment of the present invention.
FIG. 6 is a plan view illustrating a state where a top plate has been removed, according to a third exemplary embodiment of the present invention.
FIG. 7 is a cross-sectional view of main portions of a conventional induction heating cooker, illustrating flows of magnetic lines of forces in conventional heating coil units, which corresponds to the induction heating cooker illustrated in FIG. 4 from which second ferrites and third ferrites are removed.

### DESCRIPTION OF EMBODIMENTS

Hereinafter, the present invention will be described, with reference to the drawings. Further, the present invention is not intended to be restricted by the exemplary embodiments which will be described later.

### (First Exemplary Embodiment)

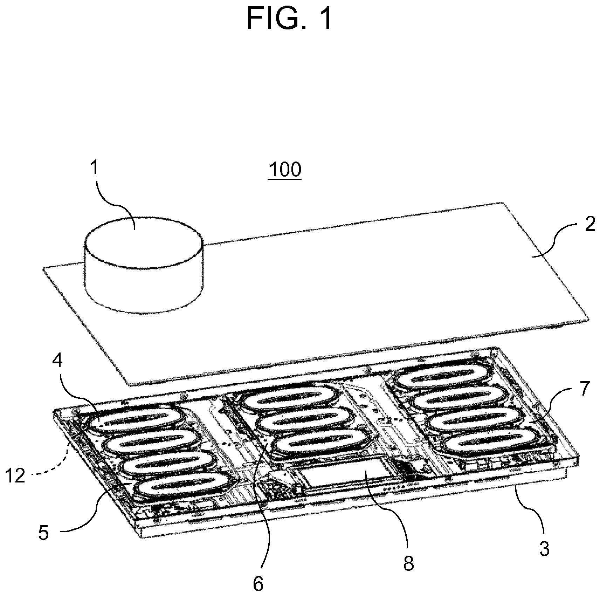

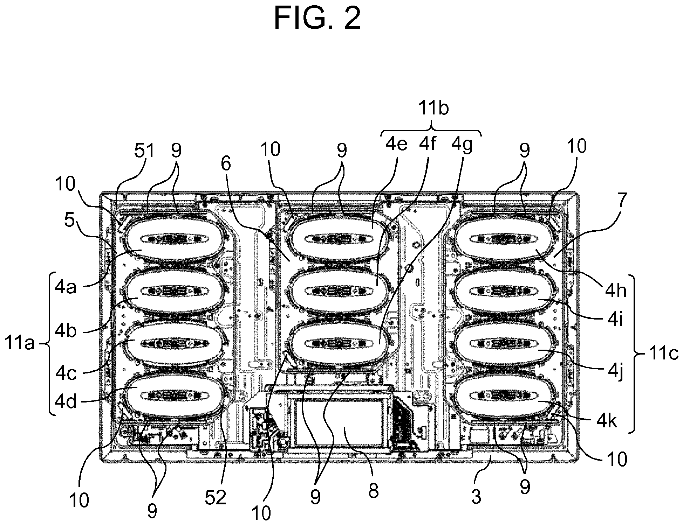

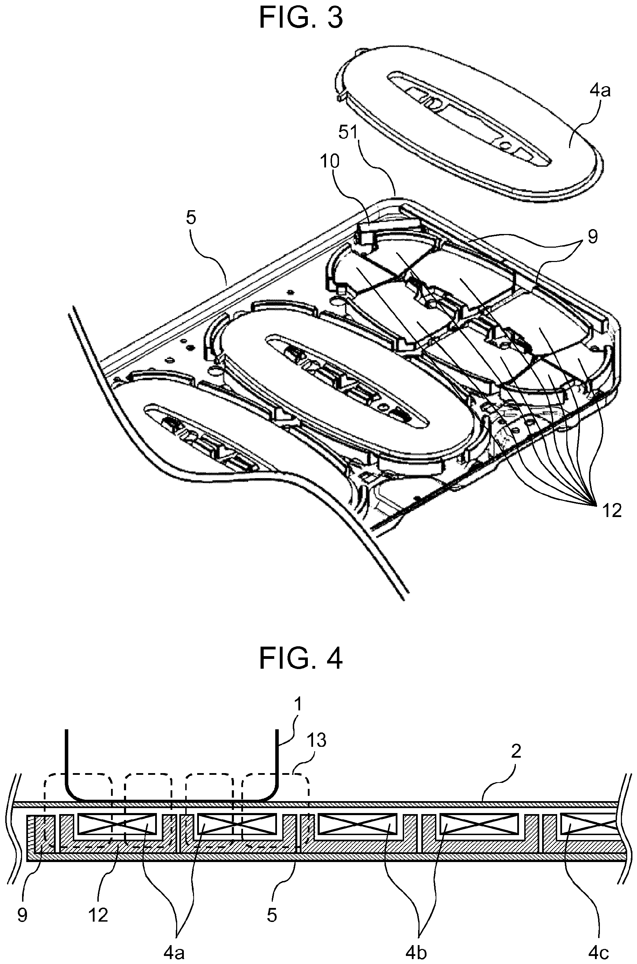

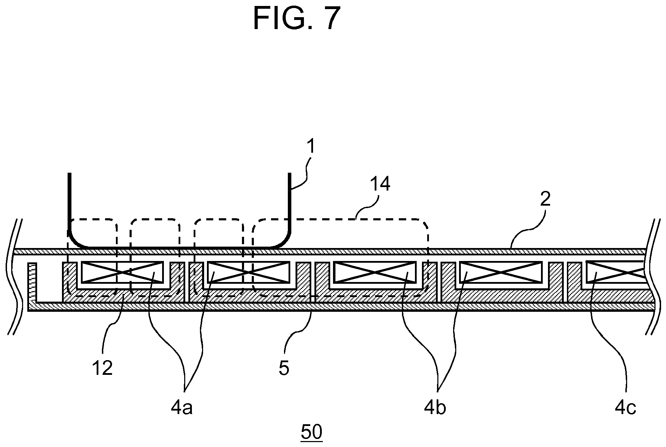

FIG. 1 is an exploded perspective view of an induction heating cooker according to a first exemplary embodiment of the present invention. FIG. 2 is a plan view illustrating a state where a top plate has been removed, according to the first exemplary embodiment of the present invention. FIG. 3 is an exploded perspective view of heating coil units in the induction heating cooker according to the first exemplary embodiment of the present invention. Further, FIG. 4 is a cross-sectional view of main portions of the induction heating cooker, illustrating flows of magnetic lines of forces in the induction heating cooker illustrated in FIG. 1. FIG. 7 illustrates a cross-sectional view of main portions of a conventional induction heating cooker, illustrating flows of magnetic lines of forces in conventional heating coil units, which corresponds to the induction heating cooker illustrated in FIG. 4 from which second ferrites and third ferrites are removed.

Referring to FIG. 1 and FIG. 3, under top plate 2 covering an opening portion in an upper portion of outer shell 3, there are provided various members in induction heating cooker 100 having a multi-coil structure, which is constituted by a plurality of heating coils 4 and the like. Near lower bottom surfaces of respective heating coil units 4, near outer peripheries thereof, and near inner peripheries thereof, there are provided first ferrites 12.

As illustrated in FIG. 1 and FIG. 2, a plurality of heating coil units 4 are placed in such a way as to be arranged in planar longitudinal and lateral rows, inside outer shell 3. In induction heating cooker 100 according to the present exemplary embodiment, heating coil units 4 have an elliptical shape with a length of about 80 mm in a transverse direction and with a length of about 180 mm in a longitudinal direction. Further, for example, each four or three heating coil units 4, out of heating coil units 4, are secured through an adhesive agent made of silicon and the like, in such a way as to be arranged, closely to each other, on shield boxes 5, 6, 7. In top plate 2, there is an area capable of heating, just above an area in which heating coil units 4 are placed. Even if two or more to-be-heated objects are placed within this area capable of heating, it is possible to perform induction heating thereon.

Further, in top plate 2, there is placed manipulation display portion 8, in an area outside the area capable of heating, in which heating coil units 4 are placed. Manipulation display portion 8 is constituted by a liquid crystal display portion, and a touch panel overlaid thereon. Manipulation display portion 8 is configured to display manipulation buttons and to display the contents of manipulations and the contents of operations, through light emission, in manipulation display portion 8, when induction heating cooker 100 has been activated.

Referring to FIG. 2, shield boxes 5, 6, 7 have bottom surfaces having asymmetric polygonal shapes (for example, hexagonal shapes) provided by cutting partial corners from substantially-rectangular shapes, substantially-polygonal shapes having rounded corner portions (with R shapes), and other shapes, in order to be prevented from interfering with other components in induction heating cooker 100. Further, shield boxes 5, 6, 7 are formed to have substantially-box-type shapes (shield boxes) having bottom surfaces, and side walls provided on the bottom surfaces at their outer peripheries. Further, in shield box 5, heating coil units 4a, 4b, 4c, 4d are placed to form coil module 11a. In shield box 6, heating coil units 4e, 4f, 4g are placed to form coil module 11b. In shield box 7, heating coil units 4h, 4i, 4j, 4k are placed to form coil module 11c. Coil module 11a and coil module 11c are placed in a leftwardly/rightwardly inverted manner (bisymmetrically). Further, in respective coil modules 11a, 11b, 11c, respective second ferrites 9 are placed in shield boxes 5, 6, 7 through an adhesive agent made of silicon and the like, at the ends in the longitudinal direction, and, furthermore, third ferrites 10 are selectively placed therein.

In FIGS. 4 and 7, broken lines indicate magnetic lines of forces 13, 14.

Hereinafter, there will be described induction heating cooker 100 having the aforementioned structure according to the present exemplary embodiment, regarding operations and effects thereof.

At first, in coil module 11a, respective heating coil units 4a, 4b, 4c, 4d are placed closely to each other and, therefore, magnetic fluxes generated from respective heating coil units 4a, 4b, 4c, 4d are influenced by first ferrites 12 adjacent thereto. Namely, magnetic fluxes generated from heating coil unit 4a are influenced by first ferrites 12 placed under heating coil unit 4b. Further, magnetic fluxes generated from heating coil unit 4b are influenced by first ferrites 12 placed under heating coil units 4a and 4c.

For example, when to-be-heated object 1 with a diameter of about 90 mm is heated by heating coil unit 4b, heating coil units 4a, 4c adjacent to heating coil unit 4b are placed evenly in a forward and rearward (longitudinal) direction, and the walls of shield box 5 are placed substantially evenly in a leftward and rightward (lateral) direction, so that magnetic fluxes generated from heating coil unit 4b are evenly spread in a substantially concentric shape.

However, when to-be-heated object 1 with a diameter of about 90 mm is heated by heating coil unit 4a placed at an end, only heating coil unit 4b is the heating coil unit adjacent to heating coil unit 4a. Further, in the leftward and rightward (lateral) direction, the corner portions of shield box 5 in one side are formed to have oblique walls and, therefore, are at shorter distances from heating coil unit 4a than those of the side walls of the other portions of shield box 5. Therefore, if there is no second ferrite 9, as indicated by the lines of magnetic forces 14 in FIG. 7, a deflection will occur at a portion of magnetic fluxes generated from the heating coil unit, for example, in magnetic fluxes spread toward heating coil unit 4b in the inner side, which inhibits magnetic fluxes from being concentrated in to-be-heated object 1. Further, if there is no third ferrite 10, the same phenomenon will occur.

On the other hand, in induction heating cooker 100 according to the present exemplary embodiment, as illustrated in FIG. 4, second ferrites 9 are placed at such positions that these second ferrites 9 and heating coil unit 4b adjacent to heating coil unit 4a placed at the end are symmetric with respect to heating coil unit 4a placed at the end. Further, these second ferrites 9 are placed outside side walls of first ferrites 12 in heating coil unit 4a and, also, between these side walls and outer shell 3.

Further, as illustrated in FIG. 2 and FIG. 3, third ferrites 10 can be also placed at positions facing the side walls of corner portions of shield box 5. For example, in induction heating cooker 100 according to the present exemplary embodiment, as illustrated in FIG. 2, third ferrite 10 is provided in such a way as to face the side wall of corner portion 51, wherein this third ferrite 10 has such a shape (an oblique shape, more specifically an oblique shape formed by partially cutting a corner of shield box 5 having a substantially-rectangular shape) that the shape of this third ferrite 10 and the oblique shape of the side wall of corner portion 52, which is diagonal to corner portion 51 of shield box 5, are substantially symmetric.

With this structure, it is possible to suppress deflections of magnetic fluxes as illustrated in the lines of magnetic forces 13 in FIG. 4, which causes magnetic fluxes to spread in a substantially-concentric shape. Therefore, magnetic fluxes are liable to concentrate in to-be-heated object 1, which can suppress leakages of electromagnetic waves and radiant noises, which enables provision of induction heating cooker 100 having excellent reliability.

According to the present exemplary embodiment, it is also possible to provide the same effects for heating coil units 4d, 4e, 4g, 4h, 4k placed at the ends, as well as for the aforementioned heating coil unit 4a. Further, in cases where to-be-heated object 1 with an outer diameter (diameter) of about 200 mm is heated with two or more heating coil units, for example, with heating coil units 4a and 4b, in cases where to-be-heated object 1 with an outer diameter (diameter) of about 300 mm is heated with two or more heating coil units, for example, with heating coil units 4a, 4b, 4c, and in other cases, similarly, it is possible to provide the same effects. Further, in cases where to-be-heated object 1 covering all of heating coil units 4a, 4b, 4c, 4d is heated, magnetic fluxes are balanced through to-be-heated object 1 and, therefore, the second ferrites do not exert significant effects.

### (Second Exemplary Embodiment)

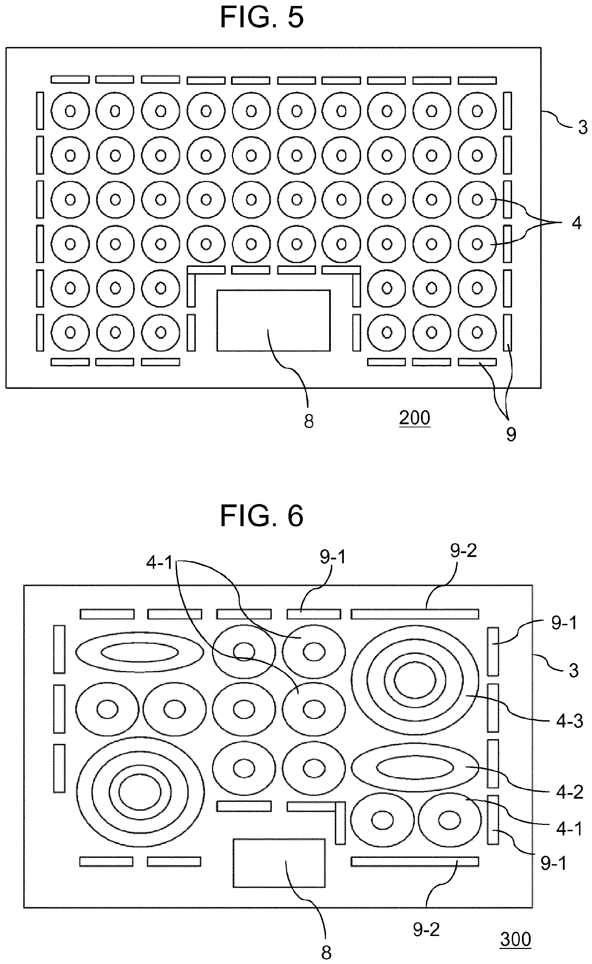

FIG. 5 is a plan view illustrating induction heating cooker 200 according to a second exemplary embodiment of the present invention, in a state where a top plate is removed therefrom. Further, induction heating cooker 200 according to the present exemplary embodiment has the same basic structure as that of induction heating cooker 100 according to the first exemplary embodiment and, therefore, will be described mainly regarding differences therefrom. Further, the same elements as those of the first exemplary embodiment will be designated by the same reference characters and will not be described.

Induction heating cooker 200 illustrated in FIG. 5 is different from induction heating cooker 100 according to the first exemplary embodiment, in that heating coil units 4 have a circular shape with an outer diameter (diameter) of about 65 mm and are placed in such a way as to be arranged in planar longitudinal and lateral rows. This structure has an advantage of having an increased area capable of induction heating and, also, has an advantage of being capable of heating to-be-heated objects with various sizes and shapes with excellent efficiency. In induction heating cooker 200 according to the present exemplary embodiment, similarly, second ferrites 9 are placed at such positions that second ferrites 9 and the inner heating coil units adjacent to the heating coil units placed at the ends, out of a plurality of heating coil units 4, are symmetric with respect to the heating coil units placed at the ends. With this structure, when a to-be-heated object is heated with a heating coil unit at an end, it is possible to suppress deflection of magnetic fluxes due to the first ferrites provided in the inner heating coil unit adjacent to the heating coil unit under the to-be-heated object. Therefore, magnetic fluxes are liable to concentrate in the to-be-heated object, which can suppress leakages of electromagnetic waves and radiant noises. This enables provision of induction heating cooker having excellent reliability.

Further, in the present exemplary embodiment, there has been described a case where three or more heating coil units are arranged longitudinally and laterally (forwardly and rearwardly, and leftwardly and rightwardly). However, when two heating coil units are arranged longitudinally and laterally, similarly, it is also possible to provide the same effects, by placing second ferrites 9 between the heating coil units and the outer shell 3.

### (Third Exemplary Embodiment)

FIG. 6 is a plan view illustrating induction heating cooker 300 according to a third exemplary embodiment of the present invention, in a state where a top plate is removed therefrom. Further, induction heating cooker 300 according to the present exemplary embodiment has the same basic structure as that of induction heating cooker 100 according to the first exemplary embodiment and, therefore, will be described mainly regarding differences therefrom. Further, the same elements as those of induction heating cooker 100 according to the first exemplary embodiment will be designated by the same reference characters and will not be described.

Induction heating cooker 300 according to the present embodiment is different from induction heating cooker 100 according to the first exemplary embodiment, in terms of combinations of sizes and shapes of coils. More specifically, as illustrated in FIG. 6, a plurality of heating coil units 4-1, 4-2, 4-3 having different sizes and shapes are placed in such a way as to be arranged closely to each other. Heating coil units 4-1 have a circular shape with an outer diameter (diameter) of about 80 mm, heating coil units 4-2 have an elliptical shape with a size of about 80 mm × about 180 mm, and heating coil units 4-3 have a circular shape with an outer diameter of about 180 mm. Heating coil units 4-2 are about twice the size of heating coil units 4-1. Further, similarly to in induction heating cooker 100 according to the first exemplary embodiment, first ferrites are placed under the respective heating coil units.

Generally, the first ferrites have respective sizes (volumes) proportional to the sizes of the heating coil units provided with these first ferrites. In induction heating cooker 300 according to the present exemplary embodiment, similarly, the first ferrites under heating coil units 4-2 are about twice the size of the first ferrites under heating coil units 4-1.

In induction heating cooker 300 according to the present exemplary embodiment, there are further formed second ferrites 9-1, 9-2, in proportion to the sizes of the heating coil units adjacent to the heating coil units placed at the ends. As illustrated in FIG. 6, second ferrites 9-1, 9-2 are placed at such positions that second ferrites 9-1, 9-2 and the heating coil units adjacent to the heating coil units placed at the ends are symmetric with respect to the heating coil units placed at the ends. Further, second ferrites 9-1, 9-2 are placed between outer shell 3 and the heating coil units placed at the ends.

As illustrated in FIG. 6, second ferrites 9-2 are about twice the size (volume) of second ferrites 9-1. On the other hand, heating coil units 4-2 are about twice the size of heating coil units 4-1, and the first ferrites provided under heating coil units 4-2 are about twice the size of the first ferrites provided under heating coil units 4-1.

In cases where the heating coil unit adjacent to a heating coil unit (for example, heating coil unit 4-1 in FIG. 6) placed at an end is heating coil unit 4-2, there is formed second ferrite 9-2 which is proportional to the size of this heating coil unit 4-2, at such a position that this second ferrite 9-2 and this heating coil unit 4-2 are symmetric with respect to this heating coil unit 4-1 placed at the end. Further, this second ferrite 9-2 is placed between outer shell 3 and this heating coil unit 4-1 placed at the end.

Further, in cases where the heating coil unit adjacent to a heating coil unit placed at an end is heating coil unit 4-1, there is placed second ferrite 9-1 which is proportional to the size of this heating coil unit 4-1, at such a position that this second ferrite 9-1 and this heating coil unit 4-1 adjacent to this heating coil unit (for example, heating coil unit 4-3 in FIG. 6) placed at the end are symmetric with respect to this heating coil unit 4-3 placed at the end. Further, this second ferrite 9-1 is placed between outer shell 3 and this heating coil unit 4-3 placed at the end.

With this structure, it is possible to suppress deflections of magnetic fluxes due to the first ferrites, which are proportional to the sizes of the heating coil units adjacent to the heating coil units placed at the ends, in inner sides of induction heating cooker 300. This can suppress leakages of electromagnetic waves and radiant noises. This enables provision of an induction heating cooker having excellent reliability.

As described above, an induction heating cooker in an example of an exemplary embodiment of the present invention includes an outer shell having an opening portion in its upper portion, a top plate configured to cover the opening portion and to place a to-be-heated object thereon, and a plurality of heating coil units for performing induction heating on the to-be-heated object, under the top plate, inside the outer shell. There are provided respective first ferrites under the heating coil units. Further, under the top plate, there are placed the heating coil units closely to each other. The heating coil units include a heating coil unit placed at an end, and a heating coil unit adjacent to the heating coil unit placed at the end. A second ferrite is provided adjacently to the heating coil unit placed at the end. Further, the second ferrite is placed in an opposite side with respect to the heating coil unit placed at the end, from the heating coil unit adjacent to the heating coil unit placed at the end, and between the outer shell and this heating coil unit placed at the end. With this structure, even when a to-be-heated object such as a pan is heated with the heating coil unit placed at the end, it is possible to suppress deflections of magnetic fluxes, thereby causing magnetic fluxes to spread substantially in a concentric shape, so that magnetic fluxes are liable to concentrate in the to-be-heated object. This can suppress leakages of electromagnetic waves and radiant noises.

The induction heating cooker according to the present invention further includes a shield box configured to place the heating coil units therein. Further, in a corner portion of the shield box, a third ferrite is placed in such a way as to face a side wall of the corner portion, such that the third ferrite has such a shape that the shape of the third ferrite and the shape of a side wall of the shield box which is diagonal to the corner portion are substantially symmetric. With this structure, it is possible to suppress deflections of magnetic fluxes due to the shape of the shield box, which can suppress leakages of electromagnetic waves and radiant noises.

In the induction heating cooker in an example of an exemplary embodiment of the present invention, the second ferrite is formed in proportion to the size of the heating coil unit adjacent to the heating coil unit placed at the end. With this structure, it is possible to certainly suppress deflections of magnetic fluxes due to the sizes of the heating coil units, which can suppress leakages of electromagnetic waves and radiant noises.

As described above, according to the present invention, even when a to-be-heated object such as a pan is heated with the heating coil unit placed at the end, it is possible to suppress deflections of magnetic fluxes, thereby causing magnetic fluxes to spread substantially in a concentric shape, so that magnetic fluxes are liable to concentrate in the to-be-heated object. This can suppress leakages of electromagnetic waves and radiant noises.

### INDUSTRIAL APPLICABILITY

As described above, according to the present invention, there is provided an induction heating cooker capable of suppressing leakages of electromagnetic waves and radiant noises, no matter which heating coil unit is used, out of a plurality of heating coil units, for heating. Accordingly, the present invention can be widely utilized for induction heating cookers for household uses, business uses and other applications.

### REFERENCE MARKS IN THE DRAWINGS

1: to-be-heated object
2: top plate
3: outer shell
4, 4a, 4b, 4c, 4d, 4e, 4f, 4g, 4h, 4i, 4j, 4k, 4-1, 4-2, 4-3: heating coil unit
5, 6, 7: shield box
8: manipulation display portion
9, 9-1, 9-2: second ferrite
10: third ferrite
11a, 11b, 11c: coil module
12: first ferrite
13, 14: magnetic lines of forces
51, 52: corner portion

## Claims

1. An induction heating cooker comprising:
an outer shell (3) having an opening portion in an upper portion of the outer shell (3);
a top plate (2) configured to cover the opening portion and on which an object to be heated (1) is placed; and
a plurality of heating coil units (4) provided under the top plate (2) inside the outer shell (3) and configured to heat the object to be heated (1);
wherein
a first ferrite (12) is provided under each of the plurality of heating coil units (4),
the heating coil units (4) are placed closely to each other and include a heating coil unit placed at an end, and a heating coil unit adjacent to the heating coil unit placed at the end,
a second ferrite (9) is provided adjacently to the heating coil unit placed at the end, and
the second ferrite (9) is placed in an opposite side with respect to the heating coil unit placed at the end, from the heating coil unit adjacent to the heating coil unit placed at the end, and between the outer shell (3) and the heating coil unit placed at the end,
**characterized by** a shield box (5) in which the plurality of heating coil units (4) are placed, wherein
in a corner portion of the shield box, a third ferrite (10) is placed in such a way as to face a side wall of the corner portion, wherein the third ferrite (10) has a shape which is substantially symmetrical with respect to a shape of a side wall of the shield box (5) located at a position diagonal to the corner portion.

2. The induction heating cooker according to claim 1, wherein
the second ferrite (9) is formed in proportion to a size of the heating coil unit adjacent to the heating coil unit placed at the end.

## Patentansprüche

1. Kochvorrichtung mit Induktionserhitzung, mit:
einer äußeren Schale (3) mit einem Öffnungsabschnitt in einem oberen Abschnitt der äußeren Schale (3);
einer Deckplatte (2), die konfiguriert ist, um den Öffnungsabschnitt abzudecken, und auf die ein zu erhitzender Gegenstand (1) gelegt wird; und
mehreren Heizspuleneinheiten (4), die unter der Deckplatte (2) innerhalb der äußeren Schale (3) vorgesehen sind und konfiguriert sind, um das zu erhitzende Objekt (1) zu erwärmen;
wobei
ein erster Ferrit (12) unter jeder der mehreren Heizspuleneinheiten (4) vorgesehen ist,
die Heizspuleneinheiten (4) eng beieinander angeordnet sind und eine an einem Ende angeordnete Heizspuleneinheit und eine Heizspuleneinheit neben der am Ende angeordneten Heizspuleneinheit umfassen;
ein zweiter Ferrit (9) neben der am Ende angeordneten Heizspuleneinheit vorgesehen ist, und
der zweite Ferrit (9), bezüglich der am Ende angeordneten Heizspuleneinheit, an einer gegenüberliegenden Seite von der Heizspuleneinheit neben der am Ende angeordneten Heizspuleneinheit vorgesehen ist, und zwischen der äußeren Schale (3) und der am Ende angeordneten Heizspuleneinheit,
**gekennzeichnet durch**
einen Abschirmkasten (5), in dem die mehreren Heizspuleneinheiten (4) angeordnet sind, wobei
in einem Eckabschnitt des Abschirmkastens ein dritter Ferrit (10) so angeordnet ist, dass er einer Seitenwand des Eckabschnitts zugewandt ist, wobei der dritte Ferrit (10) eine Form aufweist, die im Wesentlichen symmetrisch zu einer Form einer Seitenwand des Abschirmkastens ist, die diagonal zum Eckabschnitt angeordnet ist.

2. Kochvorrichtung mit Induktionserhitzung nach Anspruch 1, bei der
der zweite Ferrit (9) proportional zu einer Größe der Heizspuleneinheit ausgebildet wird, die an die am Ende angeordnete Heizspuleneinheit angrenzt.

## Revendications

1. Cuisinière à chauffage par induction, comprenant :
un enveloppe extérieure (3) ayant une partie d'ouverture dans une partie supérieure de l'enveloppe extérieure (3) ;
une plaque supérieure (2) configurée pour couvrir la partie d'ouverture et sur laquelle un objet destiné à être chauffé (1) est placé ; et
une pluralité d'unités à bobine de chauffage (4) prévues sous la plaque supérieure (2) à l'intérieur de l'enveloppe extérieure (3) et configurées pour chauffer l'objet destiné à être chauffé (1) ;
dans laquelle
une première ferrite (12) est prévue sous chacune de la pluralité d'unités à bobine de chauffage (4),
les unités à bobine de chauffage (4) sont placées près les unes des autres et incluent une unité à bobine de chauffage placée à une extrémité, et une unité à bobine de chauffage adjacente à l'unité à bobine de chauffage placée à l'extrémité,
une deuxième ferrite (9) est prévue de façon adjacente à l'unité à bobine de chauffage placée à l'extrémité, et la deuxième ferrite (9) est placée dans un côté opposé en ce qui concerne l'unité à bobine de chauffage placée à l'extrémité, par rapport à l'unité à bobine de chauffage adjacente à l'unité à bobine de chauffage placée à l'extrémité, et entre l'enveloppe extérieure (3) et l'unité à bobine de chauffage placée à l'extrémité,
**caractérisée par**
une boîte de protection (5) dans laquelle la pluralité d'unités à bobine de chauffage (4) sont placées, dans laquelle, dans une partie de coin de la boîte de protection, une troisième ferrite (10) est placée de manière telle à faire face à une paroi latérale de la partie de coin, dans laquelle la troisième ferrite (10) a une forme qui est sensiblement symétrique en ce qui concerne une forme d'une paroi latérale de la boîte de protection (5) située à une position diagonale à la partie de coin.

2. Cuisinière à chauffage par induction selon la revendication 1, dans laquelle
le deuxième ferrite (9) est formée en proportion par rapport à une taille de l'unité à bobine de chauffage adjacente à l'unité à bobine de chauffage placée à l'extrémité.
